# FASCICULE DE BREVET EUROPEEN

(11) **EP 2 447 105 B1**
(45) Date de publication et mention de la délivrance du brevet: **22.01.2020**
(21) Numéro de dépôt: 11306304.4
(22) Date de dépôt: 07.10.2011
(51) Int. Cl.: B60L 5/00

(54) **Système d'alimentation par le sol pour véhicule de transport et procédés associés**
Bodengeführtes Stromversorgungssystem für Transportfahrzeug, und entsprechende Verfahren
System for supplying a transport vehicle via the ground and related methods

(30) Priorité: 07.10.2010 FR 1058154
(43) Date de publication de la demande: 02.05.2012
(73) Titulaire: ALSTOM Transport Technologies, 93400 Saint-Ouen (FR)
(72) Inventeur: Alexandre, Jean-Luc, 78240 AIGREMONT (FR)
(74) Mandataire: Lavoix

(56) Documents cités:
- WO-A2-2006/127185
- FR-A1- 2 910 391
- GB-A- 191 308 267
- JP-A- 2010 125 974
- US-A- 5 207 304
- SATO F ET AL: "CONTACTLESS ENERGY TRANSMISSION TO MOBILE LOADS BY CLPS -TEST DRIVING OF AN EV WITH STARTER BATTERIES", IEEE TRANSACTIONS ON MAGNETICS, IEEE SERVICE CENTER, NEW YORK, NY, US, vol. 33, no. 5, 1 septembre 1997 (1997-09-01), pages 4203-4205, XP011086420, ISSN: 0018-9464, DOI: DOI:10.1109/20.619710

## Description

L'invention se rapporte à un système et à un procédé d'alimentation en énergie électrique par le sol, en particulier par induction, destinés à un véhicule de transport, notamment de type tramway. L'invention concerne également un procédé de maintenance et d'entretien d'un tel système.

Il existe des systèmes d'alimentation en énergie électrique par le sol permettant à des véhicules de type tramway de capter l'énergie électrique du système de manière ponctuelle, lorsque la présence du véhicule est détectée.

Les demandes EP 0 979 176, FR 2 791 930, EP 1 043 187 et EP 2 088 025 décrivent par exemple de tels systèmes qualifiés de systèmes « APS » (Alimentation Par le Sol). Selon le principe de l'APS, le système comporte une série de segments de piste de contact, isolés entre eux, et une ligne électrique alimentée en permanence s'étendant parallèlement à la série de segments. En outre, des moyens de commutation sont prévus pour le raccordement indépendant et de manière sélective des segments de piste de contact à la ligne électrique, en particulier de sorte qu'un segment n'est mis en contact avec la ligne électrique que lorsque le véhicule est détecté au-dessus de ce segment. L'énergie électrique transmise par les segments de piste de contact est captée par des frotteurs conducteurs situés sous le véhicule.

De tels systèmes utilisent des rails d'alimentation par contact, ce qui engendre des problèmes d'usure des matériaux et des problèmes de fiabilité de l'alimentation liés aux intempéries que subissent les rails, tels que orages, neige, pluie, glace, sable et eau. Par ailleurs, l'implantation de ces systèmes dans des zones de forte circulation et au niveau des appareils de voie soulève des difficultés d'installation et de maintenance des systèmes.

Il existe également des systèmes d'alimentation par le sol sans contact, reposant sur le principe de l'induction. Les demandes WO 2010/000494 et WO 2010/000495 décrivent par exemple un système de transfert d'énergie électrique par induction à un véhicule, dans lequel une boucle émettrice émet par le sol et de manière continue un champ électromagnétique, capté par un récepteur placé sous le véhicule de manière à alimenter le véhicule en énergie de traction ou à recharger une batterie présente sur le véhicule.

De tels systèmes présentent toutefois l'inconvénient d'émettre un champ électromagnétique puissant en permanence tout le long de la voie, ce qui engendre des pertes d'énergie et des perturbations électromagnétiques importantes pour l'environnement dans lequel les systèmes sont implantés. En outre, ces systèmes prévoient l'installation de la boucle émettrice du champ électromagnétique tout le long de la voie, ce qui rend difficile l'adaptation d'une installation déjà existante à un tel système. De plus, de tels systèmes imposent de réaliser de lourdes infrastructures, et notamment de prévoir la présence de lourdes boucles de cuivre le long de la voie, qui engendrent des difficultés majeures en termes d'encombrement, d'installation et de coût.

On connaît enfin, par la demande WO 2008/087287, un système d'alimentation en énergie électrique aérien ou par le sol et avec ou sans contact, capable de transmettre l'énergie au véhicule de manière ponctuelle à l'aide d'une pluralité d'éléments de distribution d'énergie. Ce document décrit plus particulièrement un système d'alimentation aérien et par contact, qui est un système particulièrement encombrant, peu esthétique et compliqué à installer. Il ne décrit pas la façon de mettre en oeuvre le système par le sol par induction. En outre, ce document suggère d'alimenter les éléments de distribution d'énergie dès que le véhicule de transport est à l'approche de ces éléments ce qui rend le système dangereux.

Un tel système présente également les autres inconvénients mentionnés précédemment des systèmes d'alimentation avec contact et s'avère de plus difficile à intégrer de façon optimale et de manière esthétique dans un environnement urbain.

Dans ce contexte, l'invention vise à proposer un système d'alimentation en énergie électrique par le sol pour un véhicule de transport qui soit optimal en termes de rendement énergétique et de fiabilité, tout en étant peu perturbateur et d'encombrement minimal pour l'implantation dans son environnement.

A cette fin, l'invention a pour objet, selon un premier aspect, un système d'alimentation en énergie électrique par le sol selon la revendication 1.

Le système peut également présenter une ou plusieurs des caractéristiques des revendications 2 à 12, considérées individuellement ou selon toutes les combinaisons techniquement possibles.

Selon un second aspect, l'invention concerne un procédé de mise en oeuvre du système d'alimentation selon la revendication 13.

Par « équipement auxiliaire », on entend tout dispositif qui n'est pas destiné à la traction du véhicule de transport. Il peut par exemple s'agir d'un dispositif d'éclairage, de chauffage, entre autres.

Selon un troisième aspect, l'invention concerne un procédé de maintenance et d'entretien d'un système d'alimentation selon la revendication 14.

L'intervalle de temps est par exemple de durée inférieure à 15 minutes, de préférence inférieure à 10 minutes, de préférence encore inférieure à 5 minutes.

D'autres caractéristiques et avantages de l'invention ressortiront de la description d'un exemple de réalisation conforme à l'invention qui en est donnée ci-dessous, à titre indicatif et nullement limitatif, en référence aux figures du dessin annexé, parmi lesquelles :
- la figure 1 est une représentation schématique simplifiée d'un système d'alimentation en énergie électrique par le sol conforme à l'invention,
- la figure 2 est une autre représentation schématique et partielle en perspective du système d'alimentation en énergie électrique par le sol de la figure 1, et
- la figure 3 est une vue schématique et simplifiée du dessous du véhicule de transport de la figure 1.

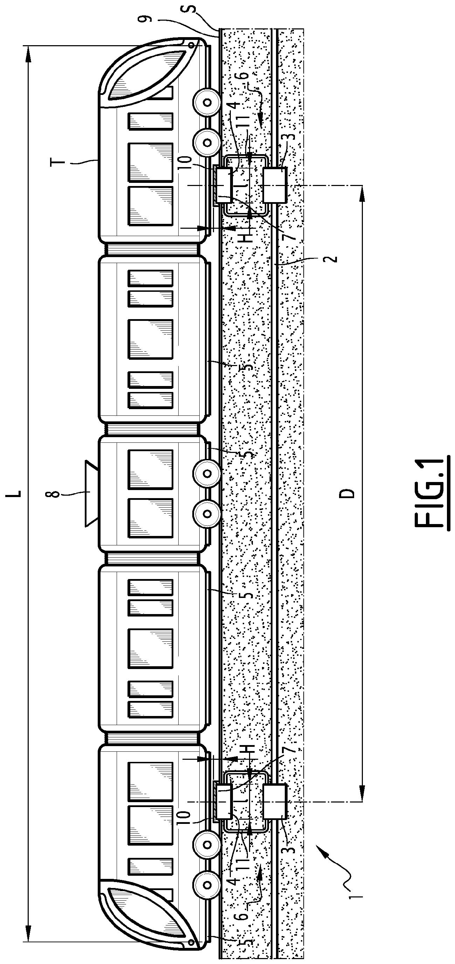

La figure 1 représente de façon schématique et simplifiée un exemple conforme à l'invention de système d'alimentation 1 en énergie électrique par le sol S pour un véhicule de transport T.

Le véhicule de transport T est par exemple un tramway, un métro ou un autre type de véhicule de transport urbain. En variante, le véhicule de transport T est un véhicule circulant dans des zones extra urbaines, tel qu'un train à grande vitesse. Le véhicule de transport T comprend notamment au moins une rame, chaque rame comprenant au moins deux wagons articulés entre eux.

Le système d'alimentation 1 comporte des éléments émetteurs 4 d'un champ électromagnétique pour alimenter le véhicule de transport T en énergie par induction. Les éléments émetteurs 4 sont répartis le long de la voie de circulation du véhicule de transport T, entre les rails 9 de la voie.

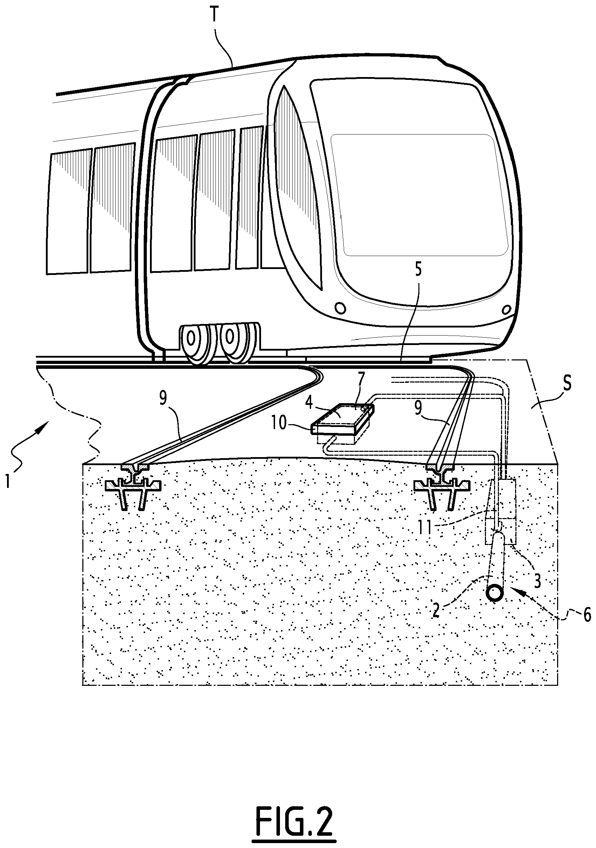

Les éléments émetteurs 4 sont au moins partiellement enterrés dans le sol S, en entre les rails 9 de la voie de circulation du véhicule de transport T, comme on peut le voir sur la figure 2. Les éléments émetteurs 4 comportent une partie faisant saillie 7 hors du sol.

Les éléments émetteurs 4 comportent un matériau de protection 10, par exemple en plastique, recouvrant par exemple au moins partiellement des antennes émettrices. Dans cet exemple, seules les parties faisant saillie 7 hors du sol sont recouvertes par le matériau de protection 10.

La hauteur H de la partie faisant saillie 7 hors du sol recouverte du matériau de protection 10 est inférieure à 5 cm, voire affleurante.

Les éléments émetteurs 4 présentent une longueur *l*, mesurée dans le sens de circulation du véhicule de transport T, comprise entre 50 et 120 cm, par exemple égale à environ 90 cm.

Au moins un détecteur de présence est par exemple placé au niveau de chaque élément émetteur 4 pour détecter l'arrivée et/ou le départ du véhicule de transport T au-dessus de l'élément émetteur 4. Selon un mode de réalisation, le détecteur de présence se compose d'un élément d'émission d'un signal de présence du véhicule de transport T disposé à chaque extrémité du véhicule de transport T, et d'un élément de réception du signal de présence disposé au niveau de l'élément émetteur 4. En particulier, ces deux fonctions, à savoir participation à la détection de présence et émetteur servant à l'alimentation du véhicule peuvent être regroupées physiquement dans un même boîtier dit de puissance et de contrôle/commande.

Le véhicule de transport T comporte par ailleurs un dispositif récepteur 5 pour capter l'énergie émise par les éléments émetteurs 4, et la transférer au véhicule de transport T sous forme d'énergie de traction et/ou d'énergie de stockage.

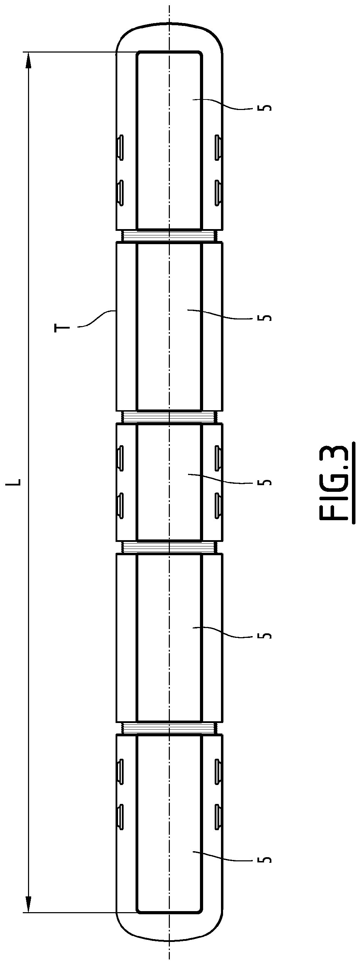

Le dispositif récepteur 5 se situe sous le véhicule de transport T, notamment dans sa partie centrale au niveau de son châssis, et s'étend sur la majeure partie de sa longueur, c'est-à-dire sur plus de 50 % de sa longueur, de préférence entre 70 et 100 % de sa longueur, en particulier sensiblement d'un bout à l'autre du véhicule de transport T, comme on peut le voir sur la figure 3. Ainsi, le dispositif récepteur 5 présente une longueur L sensiblement égale à la longueur du véhicule de transport T, mesurée dans le sens de circulation du véhicule.

Par « dispositif récepteur », on entend un seul et unique dispositif récepteur situé sous le véhicule de transport T ou, de préférence, un ensemble d'au moins deux éléments récepteurs séparés. Dans le cas présent, comme on peut le voir sur la figure 3, le dispositif récepteur 5 est réalisé en une pluralité d'éléments récepteurs séparés, chaque élément récepteur s'étendant par exemple sous une caisse du véhicule (voiture ou wagon), notamment sur la majeure partie de la longueur de la caisse du véhicule, notamment entre 70 et 100 % de la longueur de la caisse du véhicule.

Dans le mode de réalisation d'un dispositif récepteur composé d'une pluralité d'éléments récepteurs séparés 5, comme représenté sur la figure 3, il est à noter que lesdits éléments séparés sont connectés électriquement les uns aux autres par des éléments de connectique non représentés. Ces éléments récepteurs 5 peuvent être connectés en série et/ou en parallèle.

A la figure 3, on comprend que les éléments 5 sont disposés successivement le long de l'axe longitudinal de l'ensemble du véhicule de transport T, avec un élément récepteur 5 par caisse. Mais il peut aussi être prévu dans le cadre de l'invention de disposer plusieurs éléments récepteurs séparés 5 sous la même caisse, soit en les disposant successivement le long de son axe longitudinal, soit en les disposant parallèlement les uns aux autres le long dudit axe, ou encore en les disposant différemment encore.

Ainsi, la pluralité d'éléments récepteurs 5 forment un circuit sur le plan électrique, mais sont distincts.

La mise en œuvre d'un dispositif récepteur sous la forme d'éléments récepteurs séparés est avantageuse. En effet, elle permet d'adapter le dispositif récepteur aux mouvements relatifs entre les différents wagons lorsque le véhicule de transport T circule dans une partie non rectiligne de la voie de circulation, en particulier dans un virage. En effet, les wagons sont articulés entre eux et portent chacun au moins un élément récepteur.

Les éléments émetteurs 4 sont espacés les uns des autres d'une distance D, qui correspond à la distance séparant les axes centraux de deux éléments émetteurs 4 consécutifs. La distance D qui sépare deux éléments émetteurs 4 consécutifs est comprise entre la moitié et les deux tiers de la longueur L du dispositif récepteur 5, soit L/2 ≤ D ≤ 2L/3. Cette distance D est par exemple comprise entre 15 et 20 m pour une longueur L du dispositif récepteur 5 égale à 30 m. De façon générale, la longueur L du dispositif récepteur 5 est comprise entre 20 et 60 m, et la distance D séparant deux éléments émetteurs 4 est comprise entre 10 et 40 m.

Une distance D comprise entre la moitié et les deux tiers de la longueur L du dispositif récepteur 5 est particulièrement avantageuse. En effet, une distance D inférieure à la moitié de la longueur L obligerait à prévoir un nombre plus élevé d'éléments émetteurs, ce qui augmenterait le coût du système d'alimentation et compliquerait la séquence d'alimentation des éléments émetteurs. En outre, une distance D supérieure aux deux tiers de la longueur L ne permettrait plus de garantir qu'il existe à tout moment un dispositif émetteur disposé sous le dispositif récepteur, et la continuité du fonctionnement du système d'alimentation pourrait s'en trouver compromise. Par conséquent, une distance D comprise entre la moitié et les deux tiers de la longueur L du dispositif récepteur 5 offre un compromis idéal entre le coût du système d'alimentation et la fiabilité du système, en particulier la garantie d'un fonctionnement continu.

En outre, un tel système permet d'alimenter en énergie des véhicules de transport de différentes longueurs sans nécessiter d'ajout d'éléments émetteurs. En effet, la plage décrite ci-dessus offre une certaine tolérance en garantissant qu'au moins un élément émetteur se trouvera toujours au-dessous du dispositif récepteur, la zone de réception de ce dernier se trouvant dans la zone d'émission de l'élément émetteur.

Les éléments émetteurs 4 et/ou le dispositif récepteur 5 sont par exemple réalisés en cuivre ou en un autre type de matériau conducteur utilisé pour le transfert d'énergie par induction. Les éléments émetteurs 4 et/ou le dispositif récepteur 5 fonctionnent à de très hautes fréquences, notamment comprises entre 20 kHz et 10 MHz, et permettent ainsi de satisfaire à des besoins en puissance de plusieurs centaines de kW du véhicule de transport T. L'homme du métier peut adapter le choix des éléments émetteurs 4 et du dispositif récepteur 5 en fonction des performances et du rendement énergétique qu'il souhaite obtenir. En particulier, l'homme du métier peut déterminer de façon appropriée l'intensité du champ électromagnétique des éléments émetteurs 4.

Le système d'alimentation 1 comporte en outre des moyens 6 pour alimenter électriquement les éléments émetteurs 4 de manière sélective.

Les moyens 6 comportent une ligne d'alimentation électrique principale 2 qui est enterrée dans le sol S et qui se situe de préférence sur le côté des rails 9 de la voie de circulation, comme on le voit sur la figure 2. Avantageusement, le positionnement de la ligne d'alimentation électrique principale 2 sur le côté des rails 9 (à gauche ou à droite des rails 9) permet de faciliter son implantation dans le sol S et les opérations de maintenance de cette ligne. En variante, la ligne d'alimentation électrique principale 2 se situe entre les rails 9 de la voie de circulation.

La ligne d'alimentation électrique principale 2 comporte des boîtiers d'alimentation 3 reliés électriquement aux éléments émetteurs 4. Les boîtiers d'alimentation 3 correspondent à des modules de commutation comportant des entrées de commande de commutation 11 raccordées aux éléments émetteurs 4.

Les moyens d'alimentation 6 formés par les boîtiers d'alimentation 3 et la ligne d'alimentation électrique principale 2 permettent d'alimenter sélectivement un ou plusieurs des éléments émetteurs 4 à l'aide d'un système de commutation conforme au système APS, tels que ceux décrits par exemple dans les demandes EP 0 979 176, FR 2 791 930, EP 1 043 187 et EP 2 088 025. Ces moyens 6 sont donc agencés pour que seul(s) le ou les éléments émetteurs 4 situé(s) sous le véhicule de transport T soi(en)t alimenté(s) en énergie électrique. Au même instant, les autres éléments émetteurs 4 ne sont pas alimentés en énergie et n'émettent pas de champ électromagnétique.

Le fait que seuls les éléments émetteurs agencés sous le véhicule de transport soient alimentés en énergie rend le système d'alimentation selon l'invention particulièrement sûr. En effet, les éléments émetteurs ne sont alimentés en énergie que lorsqu'ils sont à l'aplomb du véhicule de transport, ce qui rend impossible qu'un élément extérieur au système d'alimentation, en particulier un usager de la voie de circulation, entre en contact avec ou passe directement au-dessus d'éléments émetteurs actifs par inadvertance. Au contraire, les éléments émetteurs qui ne se trouvent pas sous le véhicule de transport et sont donc susceptibles d'entrer en contact avec un élément extérieur au système d'alimentation, notamment un usager de la voie de circulation, ne sont pas alimentés en énergie électrique. Les usagers de la voie de circulation peuvent ainsi passer sans danger sur ces éléments émetteurs non actifs.

Le véhicule de transport T comporte également un dispositif de stockage 8 alimenté en énergie, au moins par intermittence voire en continu, par le dispositif récepteur 5. Le transfert d'énergie entre le dispositif récepteur 5 et le dispositif de stockage 8 se fait de manière connue en soi. Le dispositif de stockage 8 est par exemple situé sur le toit de la caisse centrale du véhicule de transport T, comme on le voit sur la figure 1. En variante, le dispositif de stockage 8 peut être porté par toute caisse du véhicule de transport T ou être formé par un ensemble de plusieurs éléments de stockage, la répartition des éléments de stockage étant ou non uniforme entre les caisses du véhicule de transport T. Par exemple, une caisse peut comporter un ou plusieurs éléments de stockage, voire aucun.

Le dispositif de stockage 8 comporte par exemple un assemblage de supercapacités et/ou une batterie et/ou un volant d'inertie.

Le fonctionnement du système d'alimentation 1 en énergie électrique ci-dessus va maintenant être décrit.

Lorsque le véhicule de transport T arrive au-dessus d'un élément émetteur 4, sa présence est détectée au moyen d'au moins un détecteur de présence, disposé par exemple à une extrémité du véhicule de transport T, et de préférence à chacune des extrémités du véhicule de transport T, et le boîtier d'alimentation 3 raccordé à cet élément émetteur 4 fournit l'alimentation électrique nécessaire à l'émission d'un champ électromagnétique par l'intermédiaire des entrées de commande de commutation 11 du boîtier d'alimentation 3.

De la même façon, le boîtier d'alimentation 3 raccordé à un élément émetteur 4 qui était auparavant situé en dessous du véhicule de transport T et qui maintenant n'est plus recouvert par le véhicule de transport T, permet d'arrêter de fournir un courant électrique à cet élément émetteur 4 de sorte à ne plus émettre de champ électromagnétique, du fait de la fin de détection de la présence du véhicule de transport T au-dessus de cet élément émetteur 4.

Ainsi les éléments émetteurs 4 sont alimentés suivant une séquence d'alimentation qui suit le déplacement du véhicule de transport T.

L'arrivée et/ou le départ du véhicule de transport T au-dessus d'un élément émetteur 4 sont par exemple détectés à l'aide de capteurs ou détecteurs de présence tels que ceux décrits dans les demandes EP 0 979 176, FR 2 791 930, EP 1 043 187 et EP 2 088 025.

Le champ électromagnétique émis par un élément émetteur 4, alimenté en énergie par les moyens 6 d'alimentation, est capté par le dispositif récepteur 5 placé sous le véhicule de transport T. L'énergie électrique ainsi captée permet alors la traction du véhicule de transport T et/ou, le cas échéant, d'alimenter le dispositif de stockage 8.

Le dispositif de stockage 8 permet en particulier d'alimenter le véhicule de transport T en énergie de traction lorsque celui-ci se trouve dans des zones dépourvues d'éléments émetteurs 4 ou en cas de défaillance d'un ou plusieurs éléments émetteurs 4.

La maintenance et l'entretien du système d'alimentation 1 sont assurés par une modification, et éventuellement un remplacement, rapide et facilité du ou des éléments émetteurs 4 défaillants entre le passage de deux véhicules de transport T sans interruption de la circulation et sans perturbation pour l'environnement immédiat.

Le système d'alimentation 1 en énergie électrique décrit ci-dessus présente de multiples avantages.

Le transfert d'énergie se faisant sans contact, les problèmes d'usure des matériaux sont évités, ce qui permet de diminuer considérablement les coûts d'entretien et de maintenance. De plus, l'absence de contact permet d'obtenir un système procurant des performances fiables quelles que soient les conditions climatiques.

En outre, le transfert d'énergie par induction et de manière ponctuelle lorsque le véhicule passe au-dessus des éléments émetteurs permet d'avoir un système intégralement isolé et complètement sûr, en particulier pour les usagers de la voie de circulation, tels que les piétons, cyclistes et motocyclistes.

L'alimentation par induction permet également, par l'utilisation de courants électriques à hautes fréquences, de supprimer les courants de fuite habituellement constatés dans les systèmes utilisant un courant continu à 750 Volts, et de mieux contrôler l'influence des champs électromagnétiques sur l'environnement. De plus, la fiabilité du système est augmentée par la suppression des phénomènes transitoires, tels que des surtensions ou arcs électriques, habituellement à l'origine de dégâts matériels importants.

L'utilisation d'éléments émetteurs répartis de façon ponctuelle le long de la voie de circulation et émettant un champ électromagnétique de façon focalisée vers le dispositif récepteur permet de réduire les pertes d'énergie par rapport aux systèmes de l'art antérieur.

En outre, le système ne nécessite pas d'utiliser des infrastructures lourdes et il peut s'adapter à un système déjà existant pour alimenter en énergie un véhicule.

En particulier, l'encombrement minimal au sol du système permet de l'adapter sur des installations existantes sans interruption notable et durable de l'exploitation et d'augmenter le rendement énergétique du système. La maintenance du système est facilitée en cas de défaillance d'un des éléments émetteurs car il suffit de remplacer uniquement l'élément émetteur défaillant sans interrompre la circulation, et ce dans un laps de temps très court.

Le système présente par ailleurs une forte interopérabilité car il peut être couplé à un système existant d'alimentation en énergie aérien, utilisant notamment des caténaires. L'alimentation par caténaires peut être utilisée dans les zones de faible circulation et peu urbanisées sans perturbation notable sur l'environnement, et l'alimentation par le sol du système selon l'invention peut être privilégiée dans les zones urbaines à forte circulation, par exemple aux carrefours, ou dans des lieux historiques sans perturber le trafic et l'esthétisme de l'environnement.

Les parties faisant saillie hors du sol des éléments émetteurs permettent de faciliter l'évacuation des eaux de pluie en formant des moyens de drainage naturels. De plus, ces parties étant recouvertes d'un matériau de protection, elles peuvent supporter les éventuelles charges verticales d'engins routiers.

Selon un mode de réalisation, le véhicule de transport ne comporte pas de dispositif de stockage d'énergie de type batterie propre à fournir de l'énergie de traction. Grâce à la continuité de l'alimentation du véhicule de transport en énergie électrique, assurée par la présence, à chaque instant, d'au moins un élément émetteur sous le dispositif récepteur du véhicule de transport, le système d'alimentation selon l'invention peut être mis en œuvre pour fournir directement l'énergie de traction nécessaire au fonctionnement du véhicule de transport en l'absence de dispositif de stockage d'énergie.

L'utilisation de l'induction permet d'assurer une continuité de l'alimentation en énergie du véhicule de transport, même si, à un instant donné, l'élément émetteur n'est pas exactement à l'aplomb du dispositif récepteur, ce qui augmente encore la fiabilité du système. Notamment, la zone d'émission d'un élément émetteur et/ou la zone de réception du dispositif récepteur permettent de garantir qu'un élément récepteur recevra toujours de l'énergie de l'élément émetteur même lorsque ces éléments ne sont pas exactement en regard, par exemple lorsque la zone d'articulation entre le wagon passe au-dessus de l'élément émetteur. Au contraire, les systèmes d'alimentation par contact requièrent un positionnement précis de l'élément distributeur de courant au droit du dispositif de réception d'énergie.

Bien que la description ait été faite en référence à un véhicule de type ferroviaire, il est entendu que l'invention s'applique également à des véhicules de transport routier, tels que des poids lourds.

## Revendications

1. Système d'alimentation (1) en énergie électrique par le sol pour un véhicule de transport (T), le système comportant :
- un véhicule de transport (T),
- une pluralité d'éléments émetteurs (4) d'un champ électromagnétique pour alimenter le véhicule de transport (T) en énergie par induction, les éléments émetteurs (4) étant disposés et espacés les uns des autres le long de la voie de circulation du véhicule de transport (T),
- un dispositif récepteur (5) de l'énergie émise par la pluralité d'éléments émetteurs (4), porté par le véhicule de transport (T),
- des moyens (6) pour alimenter électriquement la pluralité d'éléments émetteurs (4) de manière sélective, les moyens (6) étant agencés pour alimenter électriquement au moins un élément émetteur (4) lorsque le véhicule se situe au-dessus dudit au moins un élément émetteur (4),
**caractérisé en ce que** la longueur (L) du dispositif récepteur (5), mesurée dans le sens de circulation du véhicule, est supérieure à la distance (D) qui sépare deux éléments émetteurs (4) consécutifs le long de la voie de circulation, **en ce que**
la distance (D) qui sépare deux éléments émetteurs (4) consécutifs est comprise entre la moitié et les deux tiers de la longueur (L) du dispositif récepteur (5),
et **en ce que** les éléments émetteurs (4) sont au moins partiellement enterrés dans le sol (S) et comportent une partie faisant saillie (7) hors du sol (S).

2. Système selon la revendication 1, dans lequel le dispositif récepteur (5) s'étend sous le véhicule de transport (T), au niveau de son châssis, sur plus de 50 % de sa longueur, mesurée dans le sens de circulation du véhicule.

3. Système selon la revendication 2, dans lequel le dispositif récepteur (5) s'étend sous le véhicule de transport (T), au niveau de son châssis, sur plus de 70 % de sa longueur, notamment entre 80 et 100 % de sa longueur, mesurée dans le sens de circulation du véhicule.

4. Système selon l'une des revendications précédentes, dans lequel le dispositif récepteur (5) est composé d'une pluralité d'éléments récepteurs distincts.

5. Système selon l'une quelconque des revendications précédentes, dans lequel la distance (D) qui sépare deux éléments émetteurs (4) est comprise entre 10 et 40 m, et en ce que la longueur (L) du dispositif récepteur (5) est comprise entre 20 et 60 m.

6. Système selon l'une des revendications précédentes, dans lequel les moyens (6) pour alimenter électriquement la pluralité d'éléments émetteurs (4) sont agencés pour que seul(s) le ou les éléments émetteurs (4) situé(s) sous le véhicule de transport (T) soi(en)t alimenté(s) en énergie électrique.

7. Système selon la revendication 6, dans lequel les moyens (6) pour alimenter électriquement la pluralité d'éléments émetteurs (4) comportent au moins un détecteur de présence du véhicule de transport (T) pour détecter l'arrivée et/ou le départ du véhicule de transport (T) au-dessus dudit au moins un élément émetteur (4).

8. Système selon la revendication précédente, dans lequel le détecteur de présence comprend des éléments embarqués d'émission d'un signal de présence du véhicule de transport (T) disposés aux extrémités du véhicule de transport (T) et des éléments fixes de réception du signal de présence disposés au voisinage des éléments émetteurs (4).

9. Système selon l'une des revendications précédentes, dans lequel les éléments émetteurs (4) se situent entre les rails (9) de la voie de circulation.

10. Système selon l'une des revendications précédentes, dans lequel le véhicule de transport (T) comporte au moins un dispositif de stockage (8) alimenté en énergie, au moins par intermittence, par le dispositif récepteur (5).

11. Système selon la revendication précédente, dans lequel le dispositif de stockage (8) comporte un assemblage de supercapacités et/ou une batterie et/ou un volant d'inertie.

12. Procédé de mise en œuvre du système d'alimentation (1) selon l'une des revendications précédentes, **caractérisé en ce qu'**il comporte les étapes suivantes :
- alimenter en énergie électrique au moins un élément émetteur (4) lorsque le véhicule (T) se situe au-dessus dudit au moins un élément émetteur (4), l'énergie émise par ledit au moins un élément émetteur (4) étant captée par le dispositif récepteur (5) pour servir à la traction du véhicule (T) et/ou pour être stockée dans le dispositif de stockage (8) du véhicule (T) et/ou pour alimenter un ou plusieurs équipements auxiliaires,
- empêcher l'alimentation en énergie électrique dudit au moins un élément émetteur (4) lorsque le véhicule (T) ne se situe pas au-dessus dudit au moins un élément émetteur (4).

13. Procédé de maintenance et d'entretien d'un système d'alimentation (1) selon l'une quelconque des revendications 1 à 11, **caractérisé en ce qu'**il comporte l'étape consistant à intervenir sur le système (1) pour modifier, et éventuellement remplacer, au moins un élément émetteur (4) d'énergie électrique dans un intervalle de temps permettant de conserver la cadence habituelle du trafic, en l'absence d'intervention de maintenance et d'entretien, sur la voie de circulation qu'alimente en énergie le système (1).

## Patentansprüche

1. System zur Versorgung (1) mit elektrischer Energie mittels des Bodens für ein Transportfahrzeug (T), wobei das System aufweist:
- ein Transportfahrzeug (T),
- eine Mehrzahl an Elementen zum Aussenden (4) eines elektromagnetischen Feldes, um das Transportfahrzeug (T) mittels Induktion mit Energie zu versorgen, wobei die Elemente zum Aussenden (4) entlang des Fahrwegs des Transportfahrzeugs (T) angeordnet und zueinander mit Abstand versehen sind,
- eine Vorrichtung zum Empfangen (5) der Energie, welche von der Mehrzahl an Elementen zum Aussenden (4) ausgesendet wird, welche von dem Transportfahrzeug (T) getragen wird,
- Mittel (6), um die Mehrzahl an Elementen zum Aussenden (4) auf selektive Weise elektrisch zu versorgen, wobei die Mittel (6) eingerichtet sind, um mindestens ein Element zum Aussenden (4) elektrisch zu versorgen, wenn sich das Fahrzeug über dem besagten mindestens einen Element zum Aussenden (4) befindet,
**dadurch gekennzeichnet, dass** die Länge (L) der Vorrichtung zum Empfangen (5), gemessen in der Fahrtrichtung des Fahrzeugs, größer ist als der Abstand (D), welcher zwei aufeinanderfolgende Elemente zum Aussenden (4) entlang des Fahrwegs trennt, und dadurch, dass
der Abstand (D), welcher zwei aufeinanderfolgende Elemente zum Aussenden (4) trennt, enthalten ist zwischen der Hälfte und zwei Dritteln der Länge (L) der Vorrichtung zum Empfangen (5),
und dadurch, dass die Elemente zum Aussenden (4) zumindest teilweise in den Boden (S) eingegraben sind und einen aus dem Boden (S) herausstehenden Abschnitt (7) aufweisen.

2. System gemäß Anspruch 1, wobei sich die Vorrichtung zum Empfangen (5) unterhalb des Transportfahrzeugs (T), auf der Höhe seines Fahrgestells, über mehr als 50 % seiner Länge erstreckt, gemessen in der Fahrtrichtung des Fahrzeugs.

3. System gemäß Anspruch 2, wobei sich die Vorrichtung zum Empfangen (5) unterhalb des Transportfahrzeugs (T), auf der Höhe seines Fahrgestells, über mehr als 70 % seiner Länge, vorzugsweise zwischen 80 und 100 % seiner Länge, erstreckt, gemessen in der Fahrtrichtung des Fahrzeugs.

4. System gemäß einem der vorherigen Ansprüche, wobei die Vorrichtung zum Empfangen (5) gebildet ist aus einer Mehrzahl von verschiedenen Elementen zum Empfangen.

5. System gemäß irgendeinem der vorherigen Ansprüche, wobei der Abstand (D), welcher zwei Elemente zum Aussenden (4) trennt, enthalten ist zwischen 10 und 40 m, und dadurch, dass die Länge (L) der Vorrichtung zum Empfangen (5) enthalten ist zwischen 20 und 60 m.

6. System gemäß einem der vorherigen Ansprüche, wobei die Mittel (6), um die Mehrzahl an Elementen zum Aussenden (4) elektrisch zu versorgen, eingerichtet sind, damit einzig das oder die Element(e) zum Aussenden (4), welche(s) sich unter dem Transportfahrzeug (T) befindet/befinden, mit elektrischer Energie versorgt wird/werden.

7. System gemäß Anspruch 6, wobei die Mittel (6), um die Mehrzahl an Elementen zum Aussenden (4) elektrisch zu versorgen, mindestens einen Detektor für die Anwesenheit des Transportfahrzeugs (T) aufweisen, um die Ankunft und/oder die Abfahrt des Transportfahrzeugs (T) über dem besagten mindestens einen Element zum Aussenden (4) zu detektieren.

8. System gemäß dem vorherigen Anspruch, wobei der Detektor für die Anwesenheit aufweist fahrzeugseitige Elemente zum Aussenden eines Signals der Anwesenheit des Transportfahrzeugs (T), welche an den Enden des Transportfahrzeugs (T) angeordnet sind, und feste Elemente zum Empfangen des Signals der Anwesenheit, welche in der Umgebung der Elemente zum Aussenden (4) angeordnet sind.

9. System gemäß einem der vorherigen Ansprüche, wobei die Elemente zum Aussenden (4) sich zwischen den Schienen (9) des Fahrwegs befinden.

10. System gemäß einem der vorherigen Ansprüche, wobei das Transportfahrzeug (T) mindestens eine Vorrichtung zum Speichern (8) aufweist, welche, zumindest zeitweise, mittels der Vorrichtung zum Empfangen (5) mit Energie versorgt wird.

11. System gemäß dem vorherigen Anspruch, wobei die Vorrichtung zum Speichern (8) aufweist eine Superkapazität-Anordnung und/oder eine Batterie und/oder ein Schwungrad.

12. Verfahren zum Betreiben des Systems zur Versorgung (1) gemäß einem der vorherigen Ansprüche, **dadurch gekennzeichnet, dass** es die folgenden Schritte aufweist:
- Versorgen mit elektrischer Energie von mindestens einem Element zum Aussenden (4), wenn sich das Fahrzeug (T) über dem besagten mindestens einen Element zum Aussenden (4) befindet, wobei die Energie, welche mittels des besagten mindestens einen Elements zum Aussenden (4) ausgesendet wird, mittels der Vorrichtung zum Empfangen (5) empfangen wird, um dem Antrieb des Fahrzeugs (T) zu dienen, und/oder um in der Vorrichtung zum Speichern (8) des Fahrzeugs (T) gespeichert zu werden, und/oder um eine oder mehrere Zusatz-Ausrüstungen zu versorgen,
- Verhindern des Versorgens mit elektrischer Energie des besagten mindestens einen Elements zum Aussenden (4), wenn sich das Fahrzeug (T) nicht über dem besagten mindestens einen Element zum Aussenden (4) befindet.

13. Verfahren zur Wartung und zum Unterhalt eines Systems zur Versorgung (1) gemäß irgendeinem der Ansprüche 1 bis 11, **dadurch gekennzeichnet, dass** es den Schritt aufweist, welcher besteht aus Eingreifen in das System (1), um mindestens ein Element zum Aussenden (4) von elektrischer Energie in einem Zeitraum zu modifizieren, und gegebenenfalls zu ersetzen, welcher es erlaubt, den gewöhnlichen Takt des Verkehrs, in Abwesenheit des Eingreifens zur Wartung und zum Unterhalt, auf dem Fahrweg, welcher mittels des Systems (1) mit Energie versorgt wird, beizubehalten.

## Claims

1. A ground-based electric power supply system (1) for a transportation vehicle (T), the system including:
- a transportation vehicle (T),
- a plurality of elements (4) emitting an electromagnetic field for powering the transportation vehicle (T) by induction, the emitting elements (4) being positioned and spaced apart from each other along the circulation track of the transportation vehicle (T),
- a device (5) for receiving the energy emitted by the plurality of emitting elements (4), borne by the transportation vehicle (T),
- means (6) for electrically powering the plurality of emitting elements (4) selectively, the means (6) being laid out so as to electrically power at least one emitting element (4) when the vehicle is located above said at least one emitting element (4), **characterized in that** the length (L) of the receiving device (5) measured in the direction of the circulation of the vehicle, is greater than the distance (D) which separates two consecutive emitting elements (4) along the circulation track, and **in that**
the distance (D) which separates two consecutive emitting elements (4) is comprised between half and two thirds of the length (L) of the receiving device (5),
and **in that** the emitting elements (4) are at least partly buried into the ground (S) and include a portion (7) protruding out of the ground (S).

2. The system according to claim 1, in which the receiving device (5) extends under the transportation vehicle (T), in the area of its chassis, over more than 50% of its length, measured in the direction of circulation of the vehicle.

3. The system according to claim 2, in which the receiving device (5) extends under the transportation vehicle (T), in the area of its chassis, over more than 70% of its length, in particular between 80 and 100% of its length, measured in the direction of circulation of the vehicle.

4. The system according to one of the preceding claims, in which the receiving device (5) consists of a plurality of distinct receiving elements.

5. The system according to any of preceding claims, in which the distance (D) which separates two emitting elements (4) is comprised between 10 and 40 m, and in that the length (L) of the receiving device (5) is comprised between 20 and 60 m.

6. The system according to one of the preceding claims, in which the means (6) for electrically powering the plurality of emitting elements (4) are laid out so that only the emitting element(s) (4) located under the transportation vehicle (T) is(are) supplied with electric power.

7. The system according to claim 6, in which the means (6) for electrically powering the plurality of emitting elements (4) include at least one presence detector for the transportation vehicle (T) in order to detect the arrival and/or the departure of the transportation vehicle (T) above said at least one emitting element (4).

8. The system according to the preceding claim, in which the presence detector comprises on-board elements for emitting a presence signal indicating the presence of the transportation vehicle (T), positioned at the ends of the transportation vehicle (T) and fixed elements for receiving the presence signal, positioned in the vicinity of the emitting elements (4).

9. The system according to one of the preceding claims, in which the emitting elements (4) are located between the rails (9) of the circulation track.

10. The system according to one of the preceding claims, in which the transportation vehicle (T) includes at least one storage device (8) powered at least intermittently by the receiving device (5).

11. The system according to the preceding claim, in which the storage device (8) includes an assembly of supercapacitors and/or a battery and/or an inertial flywheel.

12. A method for implementing the power supply system (1) according to one of the preceding claims, **characterized in that** it includes the following steps:
- electrically powering at least one emitting element (4) when the vehicle (T) is located above said at least one emitting element (4), the energy emitted by said at least one emitting element (4) being collected by the receiving device (5) in order to be used for traction of the vehicle (T) and/or in order to be stored in the storage device (8) of the vehicle (T) and/or for powering one or more auxiliary pieces of equipment,
- preventing electric powering of said at least one emitting element (4) when the vehicle (T) is not located above said at least one emitting element (4).

13. A method for maintenance and servicing of a power supply system (1) according to any of claims 1 to 11, **characterized in that** it includes the step consisting of intervening on the system (1) in order to modify, and optionally replace, at least one electric energy emitting element (4) within a time interval allowing upkeep of the usual rate of the traffic in the absence of a maintenance and servicing intervention on the circulation track powered by the system (1).
